# EUROPEAN PATENT APPLICATION

(11) **EP 3 446 561 A1**
(43) Date of publication of application: **27.02.2019**
(21) Application number: 17785987.3
(22) Date of filing: 19.04.2017
(51) Int. Cl.: A01G 31/00, A01G 7/00, A01G 9/24

(54) **COMPACT CULTIVATION DEVICE**

(30) Priority: 20.04.2016 JP 2016084255
(71) Applicant: Kowa Company, Ltd., Nagoya-shi, Aichi 460-8625 (JP)
(72) Inventor: MIWA, Naoki, Nagoya-shi Aichi 461-0005 (JP); NITTA, Daisuke, Nagoya-shi Aichi 461-0005 (JP)
(74) Representative: Nobbe, Matthias
(86) International application number: PCT/JP2017/015654
(87) International publication number: WO 2017/183649

(57) **Abstract**

[Problem] Provided is a compact cultivation device which has a number of management items (parameters) such as air temperature and CO₂ concentration in cultivation space.

[Solution] A compact cultivation device 1 according to the present invention is provided with; an air conditioning sensor 6 which detects the air temperature, the CO₂ concentration, the humidity, or an air current in a cultivation space A; and a nutrient liquid sensor 8 which detects the temperature, the flow rate, the EC, or the pH of a cultivation liquid B. The compact cultivation device 1 is configured to allow cultivation of a plant V while controlling various management items detected by the sensors 6, 8.

## Description

### TECHNICAL FIELD

This invention relates to a compact cultivation device which has a cultivation space for cultivating plants.

### BACKGROUND ART

Various kinds of cultivation devices each having a cultivation space for cultivating plants (the device called a growth chamber or an incubator) have been proposed (for instance, see patent related documents 1 to 4 and non-patent related documents 1 and 2).

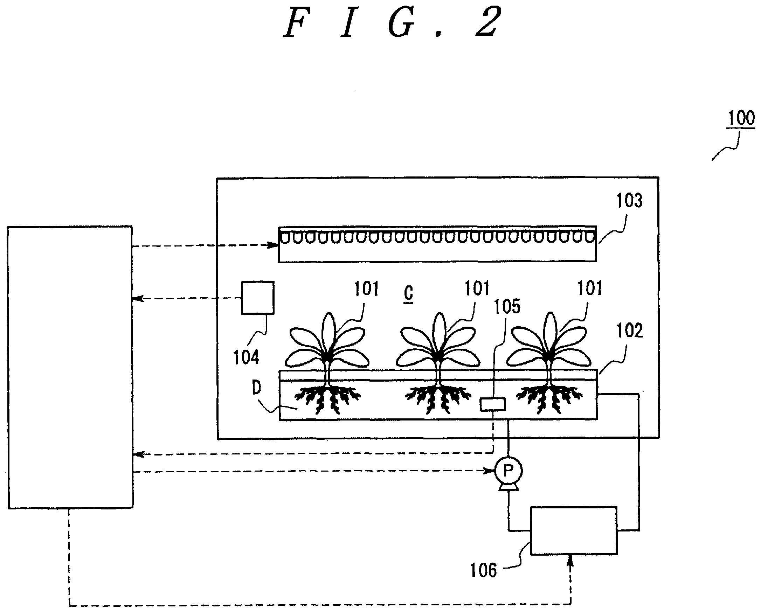

Fig.2 is a typical view that shows an instance of a conventional configuration of a cultivation device, and a cultivation device 100 in Fig.2 has a cultivation vessel 102 for planting plants 101, a lighting unit 103 for irradiating light on the plants 101, an air temperature adjuster 104 for adjusting air temperature of a cultivation space C, a liguid temperature measurer 105 for measuring liquid temperature of cultivation nutrient liquid D and a liquid temperature adjuster 106 for adjusting liquid temperature of cultivation nutrient liquid D in order to cultivate the plants 101, suitably keeping the air temperature and the liquid temperature thereof.

### PRIOR ART

### PATENT RELATED DOCUMENT

Patent related document 1: Japanese patent application publication No.2010-154791
Patent related document 2: Japanese patent application publication No.2010-279269
Patent related document 3: Japanese patent application publication No.2015-062409
Patent related document 4: Japanese patent application publication No.2007-323848

### NON-PATENT RELATED DOCUMENT

Non-patent related document 1: NIPPON MEDICAL & CHEMICAL INSTRUMENTS CO., LTD. "Artificial growth chamber/ Plant environment adjusting device" searched on April 6, 2016, Internet (URL: http://www.nihonika.co.jp/h/p/lp/lp_frame.html)
Non-patent related document 2: OGAWA SEIKI CO., LTD. "Growth chamber A1000AR" searched on April 6, 2016, Internet (URL:http://www.ogawaseiki.jpn.org/a1000ar)

### SUMMARY OF INVENTION

### PROBLEMS TO BE SOLVED BY INVENTION

However, the compact cultivation device having a proper configuration wherein various parameters can be controlled as well as the air temperature and the liquid temperature of the cultivation nutrient liquid D has not been proposed.

An object of the invention is to provide the compact cultivation device for solving the above-mentioned problem.

### MEANS FOR SOLVING PROBLEMS

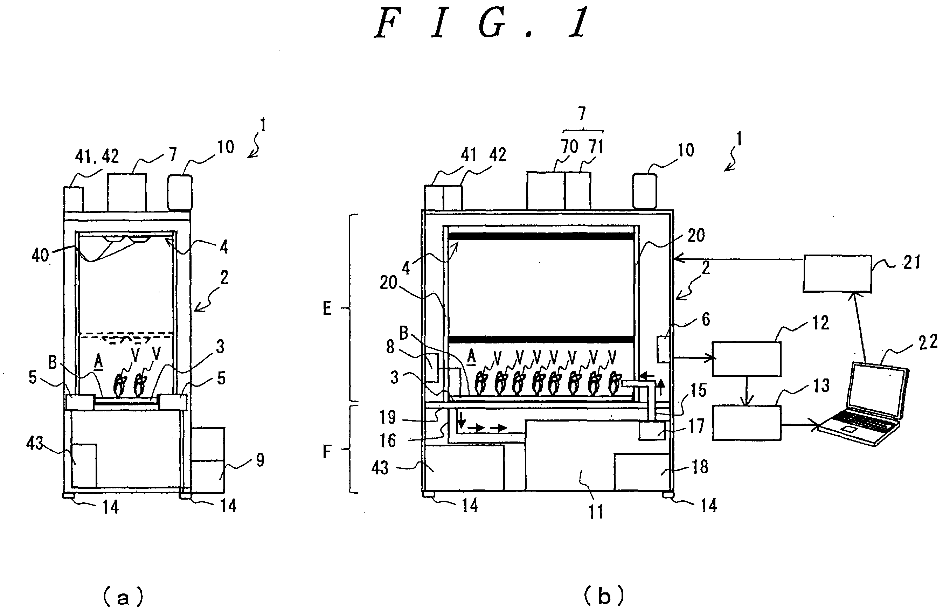

The first aspect of the invention is a compact cultivation device (1) as exemplarily shown in Fig.1(a), (b), comprising:
a plant cultivation housing (2) that forms a cultivation space (A) for cultivating plants (V);
a nutrient liquid vessel (3) that is located inside the plant cultivation housing (2) and stores cultivation nutrient liquid (B) for cultivating plants (V);
an upper lighting unit (4) that is configured to be located so as to be movable in an up/down direction on an upper hand of the nutrient liquid vessel (3) and to irradiate light on the plants (V) from an upper hand;
a light unit drive (10) that drives the upper lighting unit (4) in an up/down direction;
a lower lighting unit (5) that is configured to be located so as to have the same height as the plants (V) in the cultivation vessel (3) or to be located at a lower hand of the plants (V), so that at least part of the plants (V) can receive light from a lower hand;
a conditioning sensor (6) that detects air temperature, CO₂ concentration, humidity or an air current in the cultivation space (A) ;
a conditioning unit (7) that controls the air temperature, the CO₂ concentration, the humidity or the air current in the cultivation space (A) on the basis of a result detected by the conditioning sensor (6) ;
a nutrient liquid sensor (8) that detects a liquid temperature, a flow rate, the EC or pH of the cultivation nutrient liquid (B); and
a nutrient liquid adjuster (9) that controls the liquid temperature, the flow rate, the EC or the pH of the cultivation nutrient liquid (B) on the basis of a result detected by the nutrient liquid sensor (8).

The second aspect of the invention is the compact cultivation device, further comprising:
an input/output device (22), through which respective kinds of parameters can be inputted and outputted;
a data preparing section (12) that prepares a result detected through the conditioning sensor (6) and/or the nutrient liquid sensor (8) as data; and
a data transmitter (13) that transmits the data prepared by the data preparing section (12) to the input/output device (22).

The third aspect of the invention is the compact cultivation device, wherein the nutrient liquid sensor (8) is an EC sensor or a pH sensor, and
the data detected through the nutrient liquid sensor (8) is outputted to the input/output device (22) through the data preparing section (12) and the data transmitter (13), so that the data can be real-timely transmitted to a monitor of the input/output device and can be stored in the input/output device (22).

The fourth aspect of the invention is the compact cultivation device, wherein the conditioning sensor (6) is an air temperature sensor for measuring the air temperature of the cultivation space (A), and the conditioning unit (7) has an air conditioner (70) for cooling air in the cultivation space (A), and a conditioning controller (71) for controlling the air conditioner (70) such that the air temperature in the cultivation space (A) becomes a predetermined temperature on the basis of a result measured through the conditioning sensor.

The fifth aspect of the invention is the compact cultivation device, wherein the upper lighting unit (4) has an illumination controller (41) for controlling illumination of light to be irradiated, and a wavelength controller (42) for controlling the wavelength of light to be irradiated.

The sixth aspect of the invention is the compact cultivation device, wherein the upper lighting unit (4) has a light source (40), and
the illumination controller (41) can register an illumination time and/or current values when driving the light source (40) and thus register the illumination as data and can output the data to the input/output device (22) through the data preparing section (12) and the data transmitter (13) and transmit the data to a monitor of the input/output device (22) in real time, and store the data in the input/output device (22).

The seventh aspect of the invention is the compact cultivation device, further comprising a data receiver (21) that receives optimal cultivation parameters for each of the plant varieties that are inputted through the input/output device (22), and optimally controls the cultivation parameters in the compact cultivation device (1).

The eighth aspect of the invention is the compact cultivation device, further comprising a nutrient liquid tank (11) that supplies the nutrient liquid vessel (3) with cultivation nutrient liquid (B), and the nutrient liquid tank (11) is configured to be attachably detached.

The ninth aspect of the invention is the compact cultivation device, comprising an inclination section (14) that inclines the nutrient liquid vessel (3).

The number in parentheses shows the corresponding element in the drawings for the sake of convenience, accordingly, the descriptions are not restricted and bound by the descriptions on the drawings.

### EFFECTS OF INVENTION

According to the first through ninth aspects of the invention, it is possible to obtain the compact cultivation device having many control items (parameters), such as the air temperature and CO₂ concentration in the cultivation space, and to obtain the compact cultivation device for research wherein operations are possible on a desktop. Besides, it is possible to transmit optimal cultivation parameters for each of plant varieties from the input/output device to the compact cultivation device, so that the plants can be cultivated with simplified operations. Moreover, the cultivation device is compact and is convenient when conducting an experiment wherein the respective control items are changed with two or more devices.

### BRIEF DESCRIPTION OF DRAWINGS

Fig.1(a) is a side view of a compact cultivation device according to the invention, and Fig.1(b) is a front view thereof.
Fig.2 is a typical view that shows an instance of a conventional configuration of a cultivation device.

### EMBODIMENTS FOR CARRYING OUT THE INVENTION

An embodiment of the invention is mentioned, referring to appended drawing Fig.1.

A compact cultivation device according to the invention is a chamber type exemplarily shown with a reference numeral 1 in Fig.1(a), (b), and has
▪ a plant cultivation housing 2 that forms a cultivation space A for cultivating plants V,
▪ a nutrient liquid vessel 3 that is located inside the plant cultivation housing 2,
▪ an upper lighting unit 4 that is configured to irradiate light on the plants V from an upper hand,
▪ a lower lighting unit 5 that is configured to be located so as to have the same height as the plants V in the cultivation vessel 3 or to be located at a lower hand of the plants V, so that at least part of the plants V can receive light from a lower hand,
▪ a conditioning sensor 6 that detects air temperature, CO₂ concentration, humidity or air current in a cultivation space A,
▪ a conditioning unit 7 that controls the air temperature, the CO₂ concentration, the humidity or the air current in the cultivation space A on the basis of a result detected by the conditioning sensor 6,
▪ a nutrient liquid sensor 8 that detects a liquid temperature, a flow rate, electric conductivity (a rough index of concentration of nutrient liquid, "the EC" hereinafter) or concentration of hydrogen ion ("the pH" hereinafter) of cultivation nutrient liquid B,
▪ a nutrient liquid adjuster 9 that controls the liquid temperature, the flow rate, the EC or the pH of the cultivation nutrient liquid B on the basis of a result detected by the nutrient liquid sensor 8. In this case, the nutrient liquid vessel 3 is for storing the cultivation nutrient liquid B for the cultivation of plants V.

The above-mentioned plant cultivation housing 2 may be formed of any materials as long as they can shut out from outside air so as to put the cultivation space A in an almost hermetically sealed state. Preferably, a transparent panel, such as a transparent acrylic board, is located on the entire surface or at least one surface of the housing 2 in order to observe the growth degree of the plants. Preferably, in such compact cultivation device 1, a depth dimension of the housing 2 is 500mm, a width dimension of the housing 2 is 1000 to 1500mm and a height dimension of the housing 2 is 1100mm. Besides, preferably, the compact cultivation device 1 according to the invention is a stand-alone type, and is possible from germination to cultivation, and numbers of stocks of the plants to be cultivated are 2 to 10, or so.

Furthermore, the conditioning sensor 6 may be an air temperature sensor for measuring the air temperature of the cultivation space A, and the conditioning unit 7 has
▪ air conditioner 70 for cooling air in the cultivation space A, and
▪ a conditioning controller 71 for controlling the air conditioner 70 such that temperature in the cultivation space A becomes a predetermined temperature on the basis of a result measured through the conditioning sensor 6.

The air conditioner 70 may be a heat exchange type, such as a Peltier type electronic cooling device, and the air conditioner 70 may be located on the compact cultivation device 1. And, the temperature of the cultivation space A may be maintained between 15°C and 25°C. Inventors in the invention has used "BOX COOL" produced by OHM ELECTRIC CO., Ltd. and "SAMOL-FF" produced by NIPPON BLOWER CO., Ltd. as the air conditioner 70.

A CO₂ concentration sensor for detecting the concentration of CO₂ of the cultivation space A may be used as the conditioning sensor 6, and the conditioning unit 7 may be comprised of
▪ a CO₂ cylinder, and
▪ a supply control for controlling supply quantity of CO₂ from such a cylinder to the cultivation space A on the basis of the CO₂ concentration that is detected through the CO₂ concentration sensor. In this case, the CO₂ concentration may be maintained between 1000ppm and 1500ppm by the supply control.

Besides, a humidity sensor for detecting humidity in the cultivation space A may be used as the conditioning sensor 6, and a humidity adjuster (concretely speaking, a humidifier and the dehumidifier) for adjusting the humidity in the cultivation space A on the basis of a value detected through the humidity sensor may be used as the conditioning unit 7.

Furthermore, an air current sensor (an anemometer) for detecting air current in the cultivation space A may be used as the conditioning sensor 6, and an air current generator (a fan) for generating the air current in the cultivation space A when a value detected through the air current sensor is a predetermined value or lower may be used as the conditioning unit 7.

The upper lighting unit 4 has a light source 40, such as a LED. A guide rai 20 may be mounted in the plant cultivation housing 2 in an almost vertical direction, and the upper lighting unit 4 (at least the light source 40 in the upper lighting unit 4) may be supported by the guide rail 20 so as to be movable on the upper hand of the nutrient liquid vessel 3. The upper lighting unit 4 may be configured to be driven in an up/down direction through a light unit drive 10, such as an electric motor. By doing so, it is possible to adjust a distance between the upper lighting unit 4 and the plant V and to supply the plant V with proper amount of light. The above-mentioned light source 40 may be a waterproofing type and may be replaceable, and a wavelength or a characteristic of light irradiated on the plants V may be changed. Furthermore, the upper lighting unit 4 has
▪ an illumination controller 41 for controlling illumination of light to be irradiated,
▪ a wavelength controller 42 for controlling the wavelength of light to be irradiated, and
▪ a power supply 43 for light source.

In such a case, it is possible to change the illumination or the wavelength of the light to be irradiated. Besides, the illumination controller 41 that drives the light source 40 may record an illumination time or current values when driving the light source 40 (which has a corresponding relation with the illumination) in order to record the illumination. The inventors of the invention used a LED produced by KOWA COMPANY, LTD. (EM9, 40 dimmer type) as the light source 40.

On the other hand, the above-mentioned lower lighting unit 5 has a light source, such as a LED. When locating the lower lighting unit 5 at the position similar to the above-mentioned (that is, the position having almost the same height as the plants V in the cultivation vessel 3 or being located lower of the plants V), it is possible to irradiate light on at least a part of the plant V from the lower hand and to light up the plants V for watching and enjoying. In this case, the quantity of light from the upper lighting unit 4 and the quantity of light from the lower lighting unit 5 may be switched between the case of plating the plants V and the case of watching and enjoying the plants V. On this occasion, the LED produced by KOWA COMPANY, LTD. (EM9, 40 dimmer type) is used as the light source and the light source is supplied with power from the power supply 43 for light source.

A nutrient liquid tank 11 that supplies the nutrient liquid vessel 3 with cultivation nutrient liquid is located and is attachably detached as a compact cartridge type. In this case, when the nutrient liquid tank 11 is regularly taken out of the housing 2 and the cultivation nutrient liquid is replaced, it is possible to suppress a change of nutrients and to keep a sanitary state. For instance, the nutrient liquid tank 11 may be taken out every one week for cleaning and the nutrient liquid in the tank 11 may be replaced by a newly mixed cultivation nutrient liquid. On such an occasion, the PH or the EC may be controlled with a commercially-available measuring instrument. It is preferable to provide a supply pipe 15 for supplying the nutrient liquid vessel 3 with the cultivation nutrient liquid from the nutrient liquid tank 11, a discharge pipe 16 for discharging the cultivation nutrient liquid from the nutrient liquid vessel 3 to the nutrient liquid tank 11, and a pump 17.

The nutrient liquid sensor 8 are
▪ a temperature sensor that detects the liquid temperature of the cultivation nutrient liquid,
▪ a flow rate sensor that detects the flow rate from the nutrient liquid tank 11 to the nutrient liquid vessel 3,
▪ an oxygen concentration sensor that detects the oxygen concentration of the cultivation nutrient liquid B,
▪ an EC sensor that detects the EC of the nutrient liquid, and ▪ a pH sensor that detects the pH of the nutrient liquid, for instance. In order to raise or lower the temperature of the cultivation nutrient liquid on the basis of the result detected through the temperature sensor, a temperature adjusting unit 18 (concretely speaking, a compact heating/cooling device) may be located inside the nutrient liquid tank 11 so as to control the temperature adjusting unit 18 through the nutrient liquid adjuster 9. Besides, in order to control the flow rate of the cultivation nutrient liquid on the basis of the result detected through the flow rate sensor, the pump 17 may be controlled through the nutrient liquid adjuster 9.

Furthermore, appearances of the plants V in the middle of cultivation may be photographed with a camera at any time in order to confirm the growth state of the plants V with eyes. It may be possible to measure leafs of the plants V through a thermos-sensor and to detect a degree of transpiration of the leafs so as to obtain photosynthesis data from the backs of leafs.

The conditioning sensor 6, the nutrient liquid sensor 8 and the other sensors may be started at a fixed time only (or during a fixed period of time) without being started at any time.

Furthermore, preferably, the compact cultivation device 1 according to the invention has,
▪ an input/output device 22, such as a personal computer, through which necessary respective kinds of parameters (details will be mentioned hereinafter) can be inputted and outputted,
▪ data preparing section 12 that prepares all at once (or at any time) the result detected through the conditioning sensor 6 and/or the nutrient liquid sensor 8 as data, and
▪ a data transmitter 13 that transmits the data prepared by the data preparing section 12 to the input/output device 22.

When the EC sensor for detecting the EC of the nutrient liquid or the pH sensor for detecting the pH thereof is used as the nutrient liquid sensor 8, the data detected through the sensor may be outputted to the input/output device 22 through the data preparing section 12 and the data transmitter 13, and may be displayed on a monitor of the input/output device 22 in real time and may be stored in the input/output device 22. Besides, an illumination time or the illumination (the current values) data that are detected through the illumination controller 41 may be outputted to the input/output device 22 through the data preparing section 12 and the data transmitter 13, and may be displayed on a monitor of the input/output device 22 in real time and may be stored in the input/output device 22.

It is preferable to provide the compact cultivation device 1 according to the invention with a data receiver 21. By doing so, the data receiver 21 may be configured to receive optimal cultivation parameters for each of the plant varieties that are inputted through the input/output device 22, and to optimally control the cultivation parameters in the compact cultivation device 1 through the nutrient liquid adjuster 9, the upper lighting unit 4, the conditioning unit 7 and the like. In this case, the cultivation parameters are the flow rate, the humidity and the CO₂ of the conditioning unit 7, the illumination (the current value) of the illumination controller 41, the wavelength of the wavelength controller 42, for instance.

According to the invention, it is possible to obtain the compact cultivation device 1 having many control items (parameters), such as the air temperature or the CO₂ concentration in the cultivation space A, and to obtain the compact cultivation device 1 for research wherein operations are possible on a desktop. Besides, it is possible to transmit optimal cultivation parameters for each of plant varieties from the input/output device 22 to the compact cultivation device 1, so that the plants can be cultivated with simplified operations. Moreover, the cultivation device 1 is compact and is convenient when conducting an experiment wherein the respective control items are changed with two or more devices. Furthermore, it is possible to provide a device that is flexible regarding a setting by a so-called multi-incubator.

On the other hand, the compact cultivation device 1 according to the invention may have an inclination section 14 that inclines the nutrient liquid vessel 3 or a planter. Such an inclination section 14 are two or more adjuster bolts to be used for a leg part of the compact cultivation device 1 (that is, the bolts that can adjust protrusion amount on the lower hand), for instance, but one having the other configuration may be used in addition to the above-mentioned bolts. The whole device may be inclined by the inclination section 14, or only the nutrient liquid vessel 3 may be inclined without inclining the whole device. When providing such an inclination section 14, it is possible to accelerate or delay the flow rate of the cultivation nutrient liquid by a control of the inclined angle of the nutrient liquid vessel 3 so as to properly control the flow rate of the cultivation nutrient liquid.

The respective units and devices comprising the above-mentioned compact cultivation device 1 that heat may be located on a lower hand, and heat insulating members 19 may be located between these units/devices and the plants so that a heat is not transferred to the plants. That is, an upper section E of the device (the section where the plants V are stored) may be an area for controlling the environment, such as the air temperature, and a lower section F of the device (the section where the power supply 43 for light source are the like are located) may be an area for storing the device and the like.

### INDUSTRIAL APPLICABILITY

The compact cultivation device according to the invention can be applied to an ornamental purpose of the plats that grew up and a purpose of harvest of plants that grew up before customers and their sale.

### EXPLANATION OF REFERENCE NUMBERS

- 1: Compact cultivation device
- 2: Plant cultivation housing
- 3: Nutrient liquid vessel
- 4: Upper lighting unit
- 5: Lower lighting unit
- 6: Conditioning sensor (Air temperature sensor)
- 7: Conditioning unit
- 8: Nutrient liquid sensor
- 9: Nutrient liquid adjuster
- 10: Light unit drive
- 11: Nutrient liquid tank
- 12: Data preparing section
- 13: Data transmitter
- 14: Inclination section
- 21: Data receiver
- 22: Input/output device
- 41: Illumination controller
- 42: Wavelength controller
- 70: Air conditioner
- 71: Conditioning controller
- A: Cultivation space
- B: Cultivation nutrient liquid
- V: Plant

## Claims

1. A compact cultivation device, comprising:
a plant cultivation housing that forms a cultivation space for cultivating plants;
a nutrient liquid vessel that is located inside the plant cultivation housing and stores cultivation nutrient liquid for cultivating plants;
an upper lighting unit that is configured to be located so as to be movable in an up/down direction on an upper hand of the nutrient liquid vessel and to irradiate light on the plants from an upper hand;
a light unit drive that drives the upper lighting unit in an up/down direction;
a lower lighting unit that is configured to be located so as to have the same height as the plants in the cultivation vessel or to be located at a lower hand of the plants, so that at least part of the plants can receive light from a lower hand;
a conditioning sensor that detects air temperature, CO₂ concentration, humidity or an air current in the cultivation space;
a conditioning unit that controls the air temperature, the CO₂ concentration, the humidity or the air current in the cultivation space on the basis of a result detected by the conditioning sensor;
a nutrient liquid sensor that detects a liquid temperature, a flow rate, the EC or pH of the cultivation nutrient liquid; and
a nutrient liquid adjuster that controls the liquid temperature, the flow rate, the EC or the pH of the cultivation nutrient liquid on the basis of a result detected by the nutrient liquid sensor.

2. The compact cultivation device according to claim 1, further comprising:
an input/output device, through which respective kinds of parameters can be inputted and outputted;
a data preparing section that prepares a result detected through the conditioning sensor and/or the nutrient liquid sensor as data; and
a data transmitter that transmits the data prepared by the data preparing section to the input/output device.

3. The compact cultivation device according to claim 2, wherein the nutrient liquid sensor is an EC sensor or a pH sensor, and the data detected through the nutrient liquid sensor is outputted to the input/output device through the data preparing section and the data transmitter, so that the data can be real-timely transmitted to a monitor of the input/output device and can be stored in the input/output device.

4. The compact cultivation device according to claim 1, wherein the conditioning sensor is an air temperature sensor for measuring the air temperature of the cultivation space, and the conditioning unit has an air conditioner for cooling air in the cultivation space, and a conditioning controller for controlling the air conditioner such that the air temperature in the cultivation space becomes a predetermined temperature on the basis of a result measured through the conditioning sensor.

5. The compact cultivation device according to claim 1, wherein the upper lighting unit has an illumination controller for controlling illumination of light to be irradiated, and a wavelength controller for controlling the wavelength of light to be irradiated.

6. The compact cultivation device according to claim 2, wherein the upper lighting unit has a light source, and
the illumination controller can register an illumination time and/or current values when driving the light source and thus register the illumination as data and can output the data to the input/output device through the data preparing section and the data transmitter and transmit the data to a monitor of the input/output device in real time, and store the data in the input/output device.

7. The compact cultivation device according to claim 2, further comprising a data receiver that receives optimal cultivation parameters for each of the plant varieties that are inputted through the input/output device, and optimally controls the cultivation parameters in the compact cultivation device.

8. The compact cultivation device according to claim 1, further comprising a nutrient liquid tank that supplies the nutrient liquid vessel with cultivation nutrient liquid, and the nutrient liquid tank is configured to be attachably detached.

9. The compact cultivation device according to claim 1, comprising an inclination section that inclines the nutrient liquid vessel.
